# EUROPÄISCHE PATENTSCHRIFT

(11) **EP 0 580 026 B1**
(45) Veröffentlichungstag und Bekanntmachung des Hinweises auf die Patenterteilung: **22.11.1995**
(21) Anmeldenummer: 93110924.3
(22) Anmeldetag: 08.07.1993
(51) Int. Cl.: A01D 34/70

(54) **Mäher mit einem Mähwerksgehäuse und einem rückwärtigen eine Leiteinrichtung aufweisenden Auswurfschacht**
Mower with cutter-housing and rearward ejection shaft with directing device
Faucheuse avec boîtier et avec canal arrière d'expectoration ayant un dispositif de guidage

(30) Priorität: 21.07.1992 US 917542
(43) Veröffentlichungstag der Anmeldung: 26.01.1994
(73) Patentinhaber: DEERE & COMPANY, Moline, Illinois 61265 (US)
(72) Erfinder: Kettler, Daniel James, Beaver Dam, Wisconsin 53916 (US); Kuhn, John Boyd, Rubicon, Wisconsin 53078 (US); Benter, Dean William, Horicon, Wisconsin 53032 (US)
(74) Vertreter: Feldmann, Bernhard

(56) Entgegenhaltungen:
- EP-A- 0 498 294
- DE-A- 1 482 239
- US-A- 3 818 687
- US-A- 4 364 221

## Beschreibung

Die Erfindung bezieht sich auf einen Mäher mit einem bodenwärts offenen und eine im wesentlichen vertikal verlaufende Gehäusewand aufweisenden Mähwerksgehäuse, in dem wenigstens zwei seitlichen Abstand zueinander aufweisende und um vertikale Achsen umlaufende Schneideinheiten angeordnet sind und das einen rückwärtigen Auswurfschacht mit einem in der Gehäusewand vorgesehenen Auswurf aufweist, wobei in dem Auswurfschacht eine diesen in Förderkanäle aufteilende Leiteinrichtung vorgesehen ist.

Derartige Mäher werden als Sichelmäher bezeichnet und werden für den professionellen Einsatz von einem Fahrzeug, in der Regel einem Rasentraktor, aus angetrieben, an dem sie auch angebaut sind. Jede Schneideinheit besteht aus wenigstens einem umlaufenden Messer, die bei mehreren Schneideinheiten vielfach in derselben Drehrichtung umlaufen. Zu ihrem Antrieb dient dann ein gemeinsamer Riementrieb. Abgemähtes Gut wird durch einen seitlichen oder rückwärtigen Auswurf auf den Boden oder durch einen Förderkanal in einen mitgeführten Fangbehälter geblasen. Bei einem rückwärtigen Auswurf erfolgt die Gutablage auf dem Boden in einem Schwad, der in einem nachfolgenden Arbeitsgang aufgesammelt werden kann oder bis zum Verrotten auf dem geschnittenen Gras liegen bleibt. Im letzteren Fall soll das Gut auf dem Boden gleichmäßig verteilt sein, weil eine unregelmäßige Ablage, insbesondere, wenn sich in ihr noch Grasklumpen befinden, den Verrottungsvorgang zumindest verzögert. Andererseits ist es aber auch nicht mehr neu, Sichelmäher mit einer Einrichtung zum Mulchen zu versehen, durch die das Gut mehrmals zerkleinert und in relativ kleinen Gutteilchen auf den Boden gelangt. Diese verrotten sehr schnell, behindern das nachwachsende Gras nicht, fördern die Bodenlockerung und stören das äußere Erscheinungsbild des geschnittenen Rasens nicht. Eine Kompostierung ist ebenfalls schneller.

Der bekannte Mäher, von dem die Erfindung ausgeht (US-A-4 099 366), eignet sich nicht zum Mulchen. Er ist jedoch mit einer Leiteinrichtung versehen, die verhindern soll, daß es im Berührungsbereich der beiden Schneidkreise zu einen Niederdrücken des zu mähenden Grases kommt, wodurch dieses ungemäht bleiben würde. Die Leiteinrichtung besteht im einzelnen aus einem gebogenen und mit der Oberseite des Mähwerksgehäuses verschraubten Leitblech, das an seiner Frontseite einem vorderen Teilabschnitt des Rotationskreises eines Messers angepaßt ist und sich von dort zwischen den beiden Messern tangential nach hinten zu einem rückwärtigen Auswurf erstreckt. Diese Leiteinrichtung dient nicht zu einer gleichmäßigen Gutablage am rückwärtigen Ende des zwischen den Vorder- und Hinterrädern eines Rasentraktors aufgehängten Mähers. Eine gleichmäßige Gutablage ist mit dieser Leiteinrichtung auch nicht erreichbar, weil sie zu einer Kanalisierung des gemähten und abzulegenden Gutes nicht beiträgt.

Die Erfindung schafft hier Abhilfe, da sie Mittel vorsieht, durch die abgemähtes Gut in kanalisierter und damit gesteuerter Art aus dem Mähwerksgehäuse austritt, wobei eine Klumpenbildung vermieden oder weitgehend vermieden wird. Die Erfindung sieht deshalb vor, daß die Leiteinrichtung mit jeder Schneideinrichtung zugeordneten und sich zwischen jeder Schneideinrichtung und dem Auswurf befindlichen Leitteilen versehen ist, die jeweils eine erste sich vertikal erstreckende Seite, die der Umlaufrichtung der zugehörigen Schneideinrichtung angepaßt ist und sich in unmittelbarer Nähe deren Rotationskreises befindet, wenigstens eine zweite Seite, die mit einer Endkante der ersten Seite verbunden ist und sich von dieser aus gesehen nach rückwärts in Richtung auf den Auswurf erstreckt, und eine dritte im wesentlichen horizontal verlaufende Seite aufweisen, die die unteren Kanten der ersten und zweiten Seite miteinander verbinden und den Bereich zwischen der ersten und zweiten Seite bodenwärts abschließen. Die ersten Seiten verhindern damit einen Abwurf auf ihrer Länge, wobei die zweiten Seiten rückwärtig gerichtete Förderkanäle definieren und die dritten Seiten dazu beitragen, daß innerhalb der Leitteile keine Gut- und Luftansammlungen stattfinden. Bei einem Stillstand der Maschine werden damit keine oder zumindest weniger Grasklumpen zu Boden fallen, wobei die Förderkanäle zu einer gezielten und damit gleichmäßigen Bodenablage führen.

Diese Mäher lassen sich zum Mulchen einsetzen, wenn nach einem weiteren Vorschlag der Erfindung in den Auswurfschacht Rampen einsetzbar bzw. vorgesehen sind, die eine vierte im wesentlichen vertikal verlaufende Seite aufweisen, die sich an die erste Seite eines jeden Leitteils anschließt, der Umlaufrichtung der zugehörigen Schneideinrichtung angepaßt ist und sich in unmittelbarer Nähe deren Rotationkreises befindet. Auf diese Weise werden die Eingänge der Förderkanäle zumindest verengt, so daß das geschnittene Gut nicht sofort nach dem Schnitt in die Förderkanäle gelangt, sondern länger im Bereich der umlaufenden Schneideinrichtungen verbleibt und daher mehrmals geschnitten wird.

Die Förderwege konvergieren ohne sich zu überlappen, wenn bei einem Mäher, bei dem jeder Schneideinheit ein eigener Förderkanal zugeordnet ist, mindestens ein Leitteil mit je einer sich an die Endkanten der ersten Seite anschließenden zweiten Seite versehen ist, die von der ersten Seite aus gesehen aufeinander zulaufen.

Ein einfacher und leichter Einbau der Leiteinrichtung wird ferner dadurch erzielt, daß die Leitteile einer Leiteinrichtung miteinander und mit dem Mähwerksgehäuse verbunden sind, wobei die Leiteinrichtung einstückig und aus einem Kunststoff hergestellt sein kann.

Im einzelnen kann die Erfindung noch vorsehen, daß die zweiten Seiten benachbarter Leitteile zwischen sich oder die zweite Seite mit einer Gehäusewand des Mähwerksgehäuses die Förderkanäle begrenzen, die von den Schneideinheiten und von oben aus gesehen schräg nach innen zur Längsmittelachse des Mähers verlaufen.

Bei einem Mulcheinsatz wird bei einem Stillstand der Maschine eine übergroße Klumpenbildung dadurch vermieden, daß die erste Seite der Leitteile eine größere Höhe als die vierte Seite der Rampen aufweist, wobei sich die erste und die vierte Seite von der Oberseite des Mähwerksgehäuses nach unten erstrecken. Bei einem Mulcheinsatz verbleibt das geschnittene Gut damit nicht vollständig im Messerschneidraum, sondern kann im Bereich der Rampen, die in die Förderwege einsetzbar sind, zusammen mit der Luft teilweise entweichen.

Luftwirbel werden ferner auch dadurch vermieden, daß sich von der Unterkante der vierten Seite aus eine fünfte, die Förderkanäle nach oben begrenzende und nach rückwärts auf den Auswurf gerichtete Seite der Rampen erstreckt. Diese fünfte Seite erstreckt sich von den Schneideinheiten aus gesehen leicht schräg nach oben, wobei die fünften Seiten einer jeden Rampe im Bereich des Auswurfes in unterschiedlichen vertikalen Lagen angeordnet sind.

Schließlich kann jede Rampe mit einer Lasche versehen sein, die mit der dritten Seite der Leitteile verbindbar ist. Damit können die Teile zum Mulchen leicht eingesetzt werden, ohne daß der Mäher beispielweise von einem ihn tragenden Schlepper abgebaut werden müßte, oder wieder abgebaut werden müßte, wenn ein Mulchen nicht gewünscht oder erforderlich ist.

Die Luftführung ist ferner noch dadurch steuerbar, daß jedem Leitteil ein sich oberhalb der Schneideinheiten befindliches kreisbogenförmiges Ablenkblech zugeordnet ist. Im einzelnen kann jedes Ablenkblech einen ersten, zweiten und dritten Abschnitt aufweisen, wobei sich der erste Abschnitt von der Oberseite des Mähwerksgehäuses nach unten erstreckt und in den zweiten Abschnitt übergeht, der dicht über der umlaufenden Schneideinheit liegt und in den dritten Abschnitt übergeht, der sich von dem zweiten Abschnitt aus zur Oberseite des Mähwerksgehäuses erstreckt,wobei jedes Ablenkblech mit der Oberseite des Mähwerksgehäuses verstellbar verbunden ist, entsprechend dem Rotationskreis der zugehörigen Schneideinheit gebogen ist und als Ausschnitt aus einem Kreisring ausgebildet ist, dessen Zentriwinkel 180° beträgt, wobei der Zentriwinkel mindestens eines Abschnittes 60° beträgt.

In der Zeichnung ist ein nachfolgend näher erläutertes Ausführungsbeispiel der Erfindung dargestellt. Es zeigt:
- Fig. 1: einen Mäher mit mehreren um vertikale Achsen umlaufenden Schneideinheiten in Ansicht von unten, wobei der Mäher mit einer Leiteinrichtung und mit einer Einrichtung zum Mulchen versehen ist,
- Fig. 2: die Leiteinrichtung nach Fig. 1,
- Fig. 3: die Leiteinrichtung und die Einrichtung zum Mulchen in auseinandergezogener Darstellung,
- Fig. 4: die Leiteinrichtung mit eingesetzter Einrichtung zum Mulchen,
- Fig. 5: eine Schneideinheit mit zwei Messern,
- Fig. 6: einen Schnitt nach der Linie 6 : 6 in Fig. 5,
- Fig. 7: die beiden Messer nach Fig. 5 in auseinandergezogener Darstellung im Bereich ihres Wellenanschlusses,
- Fig. 8: ein Leitblech in der Draufsicht,
- Fig. 9: das Leitblech in Blickrichtung der Pfeile 9 : 9 in Fig. 8,
- Fig. 10: einen Schnitt nach der Linie 10 : 10 in Fig. 8 und
- Fig. 11: einen Schnitt nach der Linie 11 : 11 in Fig. 8.

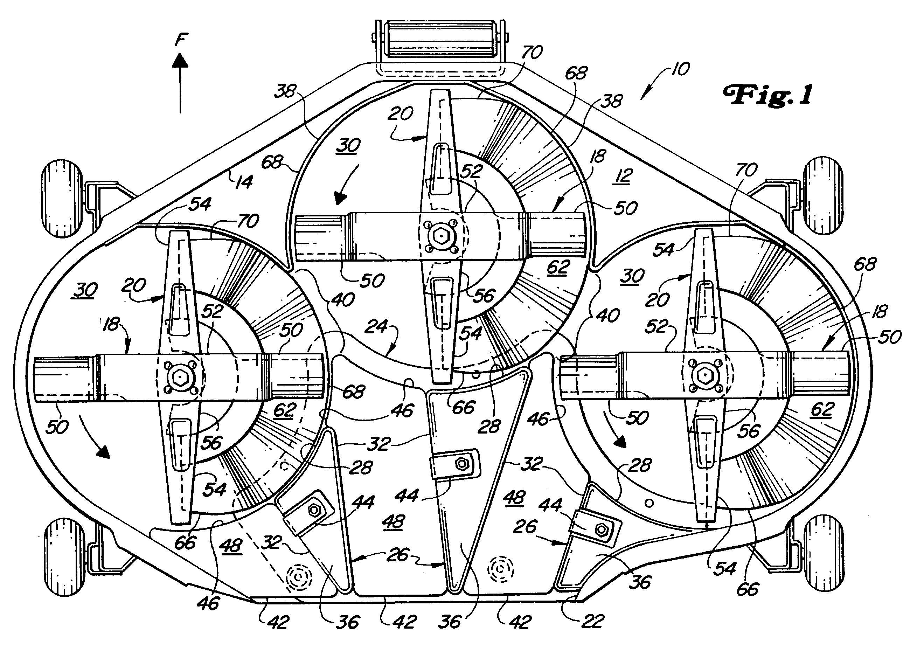

In Fig. 1 der Zeichnung ist die Unterseite eines Mähwerksgehäuses 10 eines Sichelmähers erkennbar, das eine im wesentlichen horizontal verlaufende Oberseite 12 mit einer umlaufenden Seitenwand 14 aufweist. Das Gehäuse 10 ist damit zur Bodenseite hin offen und nimmt drei vertikal gerichtete Wellen 16 auf, von denen jede ein erstes und ein zweites Messer 18, 20 antreibt, die jeweils in horizontalen Ebenen entgegen dem Uhrzeigerdrehsinn (mit Bezug auf Fig. 1) umlaufen und übereinander angeordnet sind. Im rückwärtigen Bereich des Mähwerksgehäuses 10 ist die umlaufende Seitenwand 14 unterbrochen, so daß ein rückwärtiger Auswurf 22 für abgemähtes Gut entsteht. Das Mähwerksgehäuse 10 ist in der Draufsicht etwa dreieckförmig ausgebildet, wobei sich die umlaufenden Messer an der Spitze und an den beiden Seiten befinden, so daß ein relativ großer und breiter Bereich für den rückwärtigen Auswurf entsteht. Derartige Mähwerksgehäuse eignen sich besonders für den Zwischenachsanbau unter einem Rasentraktor, so daß das abgemähte Gut nach rückwärts zwischen die rückwärtigen Räder ausgeworfen und in einem Schwad auf dem Boden abgelegt oder in einen Grasfangbehälter geleitet wird. Die Fahrt richtung des Rasentraktors und damit auch die der Schneidrichtung ist in Fig. 1 durch den Pfeil F angedeutet.

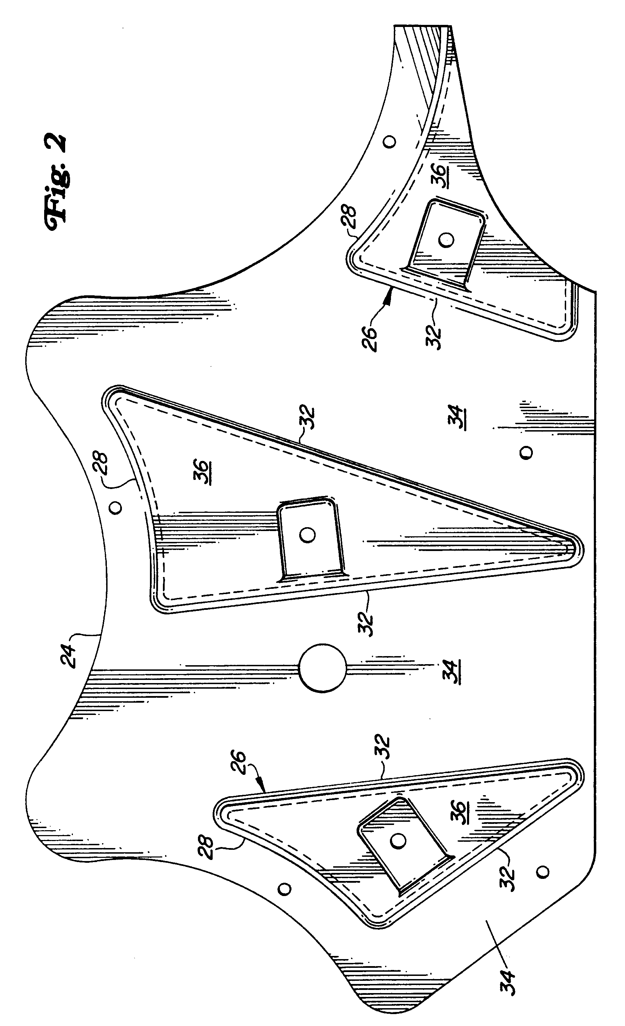

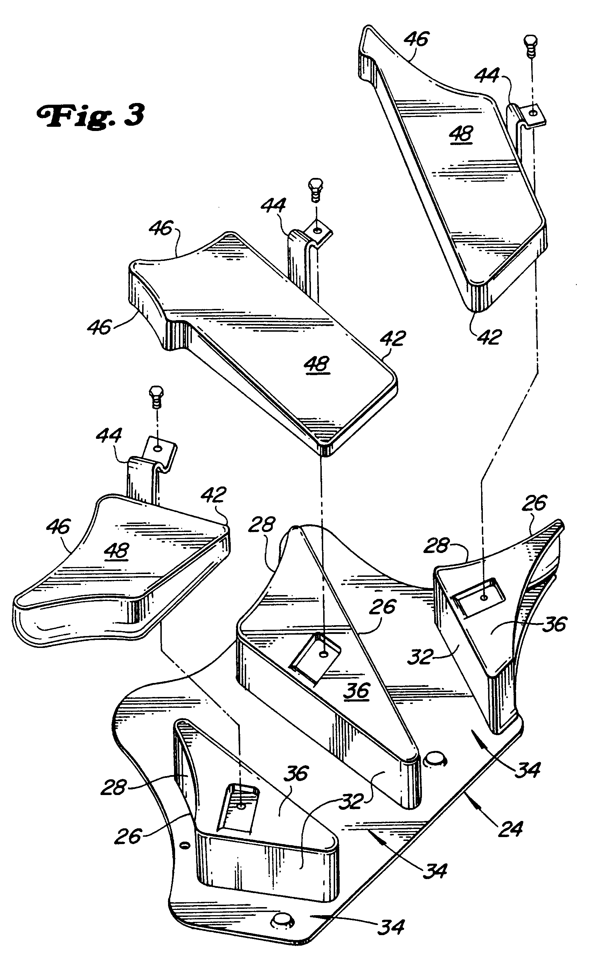

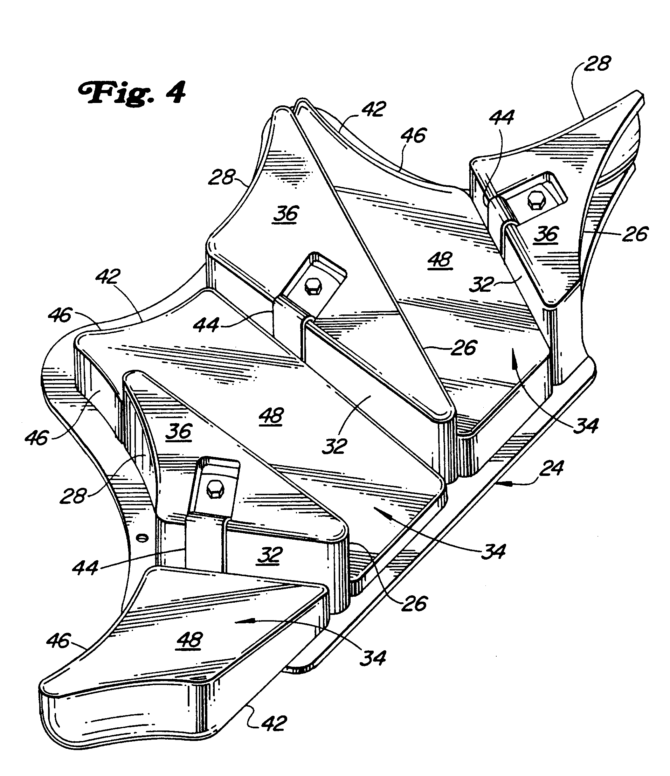

Bei solchen Sichelmähern erfolgt der Materialabwurf immer in tangentialer Richtung und, um den Materialfluß des abgemähten Gutes kontrolliert steuern zu können, sind die Seiten der Sichelmesser, von denen nicht abgeworfen werden soll, entsprechend ummantelt. Bei der Erfindung erfolgt auch der Auswurf nach hinten in einer kontrollierten Steuerung, damit bei einer entsprechenden Auswurfbreite ein dichter und gegebenenfalls schmaler Schwad gelegt werden kann. Hierzu dient eine Leiteinrichtung 24, die unterhalb der Oberseite 12 mit dem Mähwerksgehäuse 10 verschraubt oder anderweitig verbunden ist. Diese befindet sich, wie unschwer aus Fig. 1 zu erkennen ist, zwischen der mittigen Sichel und dem rückwärtigen Auswurf 22 und erstreckt sich seitlich bis zu den beiden äußeren Sicheln. Die Leiteinrichtung 24 ist in den Fig. 2 bis 4 dargestellt und weist beim Ausführungsbeispiel drei Leitteile 26 auf. Jeder Leitteil 26 hat eine Stirnfläche oder erste Seite 28, die nahe dem Rotationskreis der Messer 18 und 20 vertikal verläuft, entsprechend gebogen ausgebildet ist und Hohlräume 30 rückwärtig bzw. seitlich begrenzt, in denen die Messer 18 und 20 umlaufen. Jeder Leitteil 26 weist außerdem mindestens eine zweite ebenfalls vertikal gerichtete Führungsfläche oder zweite Seite 28 auf, die sich von den Endkanten der ersten Seiten 26 aus gesehen nach rückwärts in Richtung auf den Auswurf 22 erstrecken und zwischen sich bzw. der Seitenwand 14 des Mähwerksgehäuses 10 nach unten offene Förderkanäle 34 für das abgemähte und auszuwerfende Gut bilden. Das aus den Hohlräumen 30 austretende Gut wird dadurch auf kanalisierten Förderwegen zu dem rückwärtigen Auswurf 22 gelangen. Unterseiten oder im wesentlichen horizontal verlaufende dritte Seiten 36 sind an den unteren Kanten der ersten und zweiten Seiten 28 und 32 vorgesehen, so daß jeder Leitteil 26 zumindest im eingebauten Zustand allseits geschlossen ist. Auf diese Weise kann abgemähtes Gut oder ein von den umlaufenden Messern erzeugter Luftstrom nicht in das Innere der Leitteile gelangen. Die einzelnen Leitteile 26 sind in die Leiteinrichtung 24 integriert, die vorzugsweise einstückig aus Kunststoff hergestellt ist und für ihre Befestigung mit der Oberseite 12 des Mähwerksgehäuses 10 wenigstens einen umlaufenden Rand aufweist.

Die nach unten offenen Hohlräume 30 für die umlaufenden Messer 18 und 20 werden durch die Oberseite 12 des Mähwerksgehäuses 10, die ersten Seiten 28 der Leitteile 26, Teile der Seitenwand 14 des Mähwerksgehäuses 10 und durch vertikal verlaufende vordere Frontplatten 38 gebildet, die ebenfalls dem Rotationkreis der Sicheln angepaßt sind und mit der Oberseite 12 und / oder der Seitenwand 14 des Mähwerksgehäuses 10 verbunden sind. Da die Endkanten der ersten Seiten bis auf die rechte Eckkante des rechten Leitteils 26 in Fig. 1 nicht an die Seitenwand 14 des Mähwerksgehäuses 10 oder an die Frontplatten 38 anschließen, entstehen in den Hohlräumen 30 entsprechende seitliche Austrittsöffnungen, durch die abgemähtes Gut in die kanalisierten Förderwege austreten kann.

Bei dem bisher beschriebenen Sichelmäher entstehen durch die entgegen dem Uhrzeigerdrehsinn umlaufenden Messer 18 und 20 in den Hohlräumen 30 in derselben Drehrichtung verlaufende Luftströme, die das abgemähte Gut mit sich reißen, das durch die vorbeschriebenen Austrittsöffnungen aus den Hohlräumen 30 in die Förderkanäle 34 austreten kann. Selbstverständlich gelangen auch die von den Messern erzeugten Luftströme in die Förderkanäle 34 und transportieren dadurch das abgemähte Gut weiter in Richtung auf den Auswurf 22. Aus Fig. 1 ist noch erkennbar, daß die beim Ausführungsbeispiel vorgesehenen drei Förderkanäle 34 in Richtung auf die Längsmittelebene des Sichelmähers zu dessen rückwärtigen Ende hin konvergieren, so daß die Luftströme sich hinter dem Auswurf zu einem einzigen vereinigen, so daß das gemähte Gut zwischen den rückwärtigen Rädern des Rasentraktors in einem relativ gleichmäßigen Schwad ohne Klumpenbildung abgelegt wird. Da die Leitteile 26 allseits geschlossen sind, kann weder Luft noch abgemähtes Gut in deren Inneres eintreten, was ansonsten zu Gutansammlungen führen würde, das insbesondere bei einem Stillstand des Rasentraktors im Klumpen auf den Boden fallen würde, was unerwünscht ist.

Die Förderkanäle 34 sind bis zu den Hohlräumen 30 geführt, so daß Bereiche, in denen Lufttaschen oder Gutansammlungen entstehen könnten, vermieden sind. Hinzu kommt, daß, da die Eingänge der Förderkanäle 34 direkt an den Hohlräumen 30 liegen, sich in den Luftströmen befindliche Gutteilchen mit relativ hoher Geschwindigkeit aus den Hohlräumen 30 in die Förderkanäle 34 eintreten. Die Luft und Gutteilchen werden dann nach rückwärts und nach innen in Richtung auf die Längsmittelachse des Mähwerksgehäuses 10 geführt. Die Förderkanäle 34 laufen an ihren rückwärtigen Enden aufeinander zu, wodurch das Zusammenführen der Luft- und Gutteilströme begünstigt wird. Das Zusammenwirken der Luft- und Gutteilströme führt zu einem gleichmäßigen Verteilen des abgemähten Gutes in dem seitlichen Abstand zwischen den Reifen des Rasentraktors.

Ein derart ausgebildeter Sichelmäher läßt sich auch besonders gut zum Mulchen einsetzen. Hierzu dienen in den Fig. 1, 3 und 4 erkennbare Rampen 42, die in die Förderkanäle 34 einsetzbar sind. Bei drei Förderkanälen 34 sind deshalb auch drei Rampen 42 vorgesehen, von denen jede mit einer seitlichen Lasche 44 versehen ist, die in die dritten Seiten 36 der Leitteile 26 einsetzbar sind. Hierzu sind die dritten Seiten mit entsprechenden Einbuchtungen versehen, mit denen die Laschen verschraubt oder anderweitig befestigt werden können. Die Einbuchtungen sind dabei an Stellen vorgesehen, die eine leichte Montage oder Demontage der Rampen 42 ermöglichen, ohne daß das Mähwerksgehäuse 10 von dem Rasentraktor abgebaut werden müßte. Im eingesetzten Zustand verkleinern die Rampen die Austrittsöffnungen an den Hohlräumen, wozu eine vierte Fläche oder Seite 46 an jeder Rampe 42 vorgesehen ist, die dem Rotationskreis eines jeden Messers 18 und 20 angepaßt ist und sich an die erste Seite 28 der Leitteile 26 anschließt. Die vierten Seiten 46 haben allerdings eine geringere Höhe als die ersten Seiten 28, so daß die Austrittsöffnungen nicht vollständig geschlossen oder blockiert werden. Bis auf die mit Bezug auf Fig. 1 links liegende äußere Rampe sind die beiden übrigen Rampen 42 noch derart ausgestaltet, daß zwischen ihren entsprechenden Endkanten und den zugehörigen Spitzen der Frontplatten 38 noch vollkommen offene Austrittsöffnungen 40 entstehen. Die vierten Seiten 46 bewirken im eingesetzten Zustand, daß sich die Gutteilchen länger in den Hohlräumen 30 aufhalten, so daß sie mehrmals von den umlaufenden Messern 18 und 20 geschnitten werden und zum Mulchen geeignet sind. Da aber die vierten Seiten 46 der Rampen 42 die Austrittsöffnungen aus den Hohlräumen 30 bzw. die Eingänge in die Förderkanäle 34 nur teilweise blockieren, kann eine ausreichende Luftmenge vermischt mit mehrmals zerkleinerten Gutteilchen durch die Förderkanäle 34 austreten, so daß in den Hohlräumen ein ausreichendes Vakuum oder Hochzieheffekt entsteht. Die Schnittqualität bleibt damit sehr hoch. Von den vierten Seiten 46 aus gesehen, erstrecken sich im wesentlichen horizontal verlaufende, aber zur Horizontalen leicht schräg angeordnete Unterplatten oder fünfte Seiten 48 nach rückwärts bis in den Bereich des Auswurfes 22. Diese fünften Seiten 48 dienen dazu, den Bereich stromabwärts der vierten Seiten 46 innerhalb der Förderkanäle 34 abzudecken, so daß sich im eingesetzten Zustand oberhalb der fünften Seiten 48 keine Luft oder Gutteile ansammeln können. Die Luftgeschwindigkeit innerhalb der Förderkanäle 34 zum Transportieren des Mulchgutes nach hinten bleibt damit relativ hoch. Zumindest im Bereich des Auswurfes 22 haben die Rampen 42 unterschiedliche Höhen, so daß die Gutströme des Mulchgutes die Förderkanäle in unterschiedlichen Höhenlagen verlassen. Dies trägt auch beim Mulcheinsatz zu einer gleichmäßigen Verteilung bei.

Die Messer 18 und 20 rotieren, wie es in Fig. 1 angedeutet ist, entgegen dem Uhrzeigerdrehsinn. Das Gras wird durch das erste Messer 18 im vorderen Bereich eines jeden Hohlraumes 30 geschnitten. Das abgemähte Gut läuft dadurch entgegen dem Uhrzeigerdrehsinn um und will durch die Austrittsöffnungen 40 entweichen. Das abgemähte Gut hat eine Tendenz, sich in dem in Fig. 1 ganz links eingezeichneten Hohlraum 30 anzusammeln, und ein Auswerfen des Gutes aus diesem Hohlraum könnte dazu führen, daß aus dem zugehörigen Förderkanal 34 mehr Gut austritt, als aus den beiden anderen Förderkanälen, was in einer größeren Gutablage an der rechten Seite des Mähwerksgehäuses 10 oder der Maschine resultieren könnte. Die Rampe 42 an der linken Gehäuseseite ist deshalb anders ausgebildet als die beiden übrigen Rampen 42, indem sie eine vierte Seite 46 aufweist, die einen größeren Bereich der zugehörigen Austrittsöffnung abdeckt als die übrigen vierten Seiten. Da die Eindämmung an der linken Seite größer ist, wird in dem mit Bezug auf Fig. 1 links liegenden Hohlraum 30 ein größerer Druck als in den beiden anderen Hohlräumen entstehen. Dies führt dazu, daß zumindest ein nicht unwesentlicher Teil der in dem linken Hohlraum umhergewirbelten Gutteilchen durch die Austrittsöffnung 40 in die mittige Hohlkammer 30 gedrückt wird. Gleichfalls führt der höhere Druck dazu, daß Gutteilchen aus dem mittigen Hohlraum nicht durch die Austrittsöffnung 40 in den linken Hohlraum 30 eintreten können. Gutansammlungen in dem linken Hohlraum werden also durch die entsprechende Ausbildung der linken Rampe 42 vermieden und der aus dem linken Förderkanal 34 austretende Gutstrom ist kleiner als der aus den übrigen Förderkanälen. Eine erhöhte Gutablage an einer Maschinenseite wird vermieden und stattdessen eine gleichmäßige Gutverteilung erreicht.

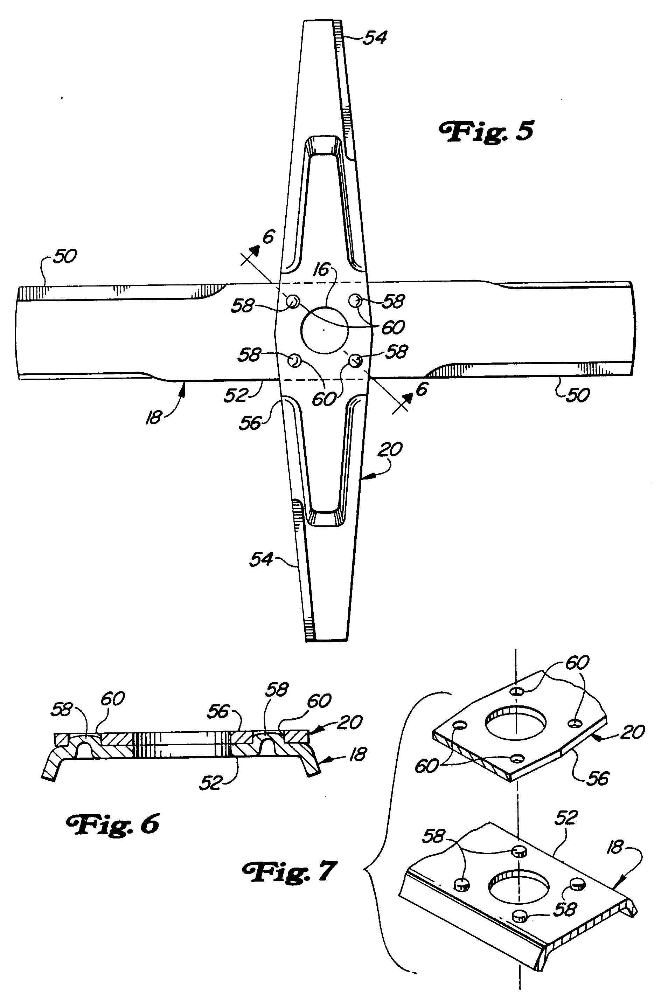

In den Fig. 5 bis 7 sind die Schneidmesser 18 und 20 im einzelnen dargestellt. Die einzelnen Schneidmesser 18 und 20 einer jeden Schneideinheit werden einzeln gefertigt und überkreuz zusammengesetzt. Das erste Messer 18 dient zum Mähen des Gutes und weist außen liegende Schneidflächen 50 auf, die gegenüber einem zentralen Mittenabschnitt 52 nach unten abgesetzt sind. Das zweite Messer 20 dient als Mulchmesser und weist außen liegende Schneidflächen 54 auf, die gegenüber einem zentralen Mittenabschnitt 56 nach oben hin abgesetzt sind. Die Schneidflächen 50 und 54 der ersten und zweiten Messer 18 und 20 weisen damit zueinander einen vertikalen Abstand auf, der beim Ausführungsbeispiel etwa 12,7 mm beträgt. Für den Zusammenbau ist der Mittenabschnitt 52 des ersten Messers 18 mit nach oben vorstehenden Knöpfen 58 oder dergleichen versehen, die im zusammengebauten Zustand in entsprechende Öffnungen 60 eingreifen können, die in dem Mittenabschnitt 56 des zweiten Messers 20 vorgesehen sind. Im zusammengebauten Zustand verhindern die zusammenwirkenden Knöpfe 58 und Öffnungen 60 eine Relativdrehung der Messer auf ihrer sie aufnehmenden Welle 16. Auf der Welle 16 sind die beiden Messer 18 und 20 gegen eine Bewegung nach oben oder unten gesichert. Ein Verschweißen der beiden Messer miteinander oder eine andere relativ kostspielige Verbindung ist somit vermieden worden.

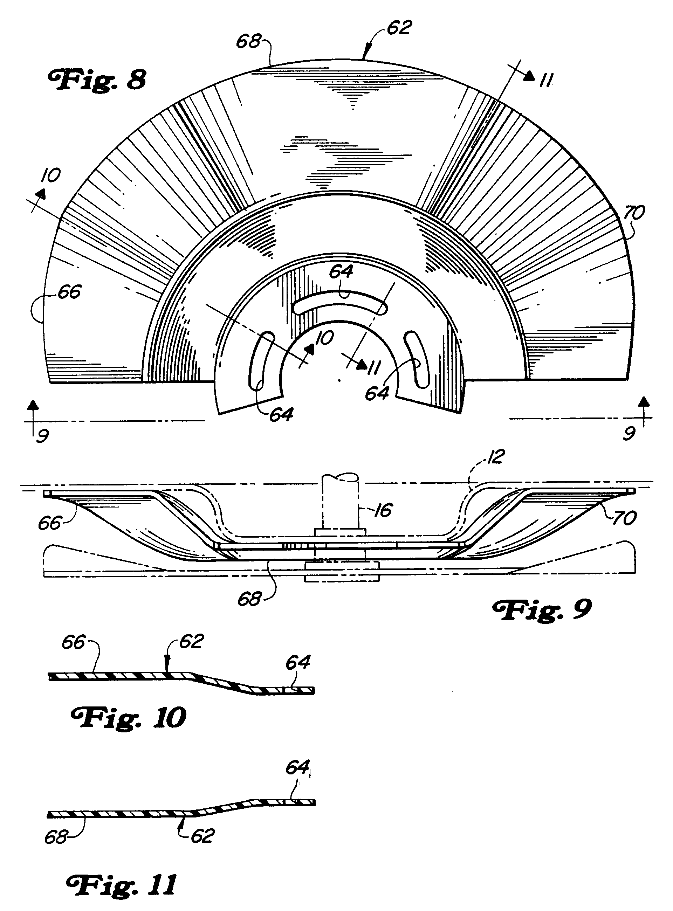

In den Fig. 8 und 9 ist noch ein Ablenkblech oder Mulchblech 62 zu erkennen. Je einer Schneideinheit ist ein eigenes Mulchblech 62 zugeordnet, die, wie aus Fig. 1 zu ersehen ist, oberhalb der jeweiligen Messer 18 und 20 in einen jeden Hohlraum 30 in verschiedenen Stellungen einsetzbar sind. Jedes Mulchblech 62 ist kreisbogenförmig ausgebildet und weist zu seiner Befestigung mit der Oberseite 12 des Mähwerksgehäuses 10 bogenförmige Langlöcher 64 auf, die sich nahe der Welle 16 befinden, so daß zu ihrer Befestigung die die Messereinheiten mit dem Mähwerksgehäuse 10 verbindenden Schrauben mitherangezogen werden können. Jedes Mulchblech 62 hat verschiedene Abschnitte, und zwar einen ersten Abschnitt 66 nahe der Oberseite 12 des Mähwerksgehäuses 10, der sich in Gutförderrichtung nach unten neigt und in einen zweiten Abschnitt 68 übergeht, der flach oder horizontal weiter in Förderrichtung mit vertikalem Abstand unter der Oberseite 12 verläuft und schließlich in einen dritten Abschnitt 70 übergeht, der wiederum in Förderrichtung nach oben abgebogen ist und dann unterhalb der Oberseite 12 zu liegen kommt. Jeder Abschnitt erstreckt sich über einen Winkel von 60° und jedes Mulchblech damit über einen Winkel von 180°. Die Mulchbleche 62 verkleinern den Raum oberhalb der Messer 18 und 20 und damit die Gutmenge, die in den Hohlräumen 30 haften bleiben kann. Für die gewünschte Luftstromführung ist natürlich ein Mindestvolumen erforderlich, jedoch je geringer der Mindestraum in diesem Bereich ist, je kleiner ist die Gefahr, daß bei einem Halt des Rasentraktors eine größere Menge von Gutklumpen auf den Boden fallen kann. Der erste Abschnitt 66 eines jeden Mulchbleches 62 dient als Rampe, um die Luft und mitgerissenen Gutteilchen wieder nach unten in Richtung der umlaufenden Messer 18 oder 20 zu lenken, damit ein nochmaliges Zerkleinern stattfinden kann. Der zweite Abschnitt 68 verringert in diesem Bereich das zur Verfügung stehende Volumen. Das effektive Volumen in dem Hohlraum 30 im Bereich des dritten Abschnittes 70 eines jeden Mulchbleches 62 ist größer als im Bereich des zweiten Abschnittes 66, wodurch der mit grossem Druck an dem zweiten Abschnitt 68 vorbeistreichende Luftstrom sich im dritten Abschnitt infolge des größeren Volumens und geringeren Druckes rasch nach oben ausdehnen kann. Hierdurch wiederum wird die Vakuumwirkung vergrößert. Die Langlöcher 64 erlauben verschiedene Einstellungen der Mulchbleche 62, so daß der dritte Abschnitt immer dort angeordnet werden kann, wo sonst eine schlechte Vakuumwirkung vorherrschen würde. Der dritte Abschnitt kann auch in einem Abschnitt angeordnet werden, der unmittelbar hinter einer das Mähwerksgehäuse 10 führenden Rolle oder einem Reifen liegt, der über das noch ungeschnittene Gras läuft und dieses zusammendrückt. Der durch den dritten Abschnitt 70 erzielte größere Vakuumeffekt trägt dann zu einem besseren sich wieder Aufstellen des zusammengedrückten Grases bei, so daß es gut geschnitten werden kann. Schließlich sind der erste und der dritte Abschnitt 66 und 70 an ihren außen liegenden Enden noch nach innen abgesetzt, um den Konturen des Mähwerksgehäuses besser anpassbar zu sein.

## Patentansprüche

1. Mäher mit einem bodenwärts offenen und eine im wesentlichen vertikal verlaufende Gehäusewand (14) aufweisenden Mähwerksgehäuse (10), in dem wenigstens zwei seitlichen Abstand zueinander aufweisende und um vertikale Achsen (16) umlaufende Schneideinheiten angeordnet sind und das einen rückwärtigen Auswurfschacht mit einem in der Gehäusewand (14) vorgesehenen Auswurf (22) aufweist, wobei in dem Auswurfschacht eine diesen in Förderkanäle (34) aufteilende Leiteinrichtung (24) vorgesehen ist, dadurch gekennzeichnet, daß die Leiteinrichtung (24) mit jeder Schneideinrichtung zugeordneten und sich zwischen jeder Schneideinrichtung und dem Auswurf (22) befindlichen Leitteilen (26) versehen ist, die jeweils eine erste sich vertikal erstreckende Seite (28), die der Umlaufrichtung der zugehörigen Schneideinrichtung angepaßt ist und sich in unmittelbarer Nähe deren Rotationskreises befindet, wenigstens eine zweite Seite (32), die mit einer Endkante der ersten Seite (28) verbunden ist und sich von dieser aus gesehen nach rückwärts in Richtung auf den Auswurf (22) erstreckt, und eine dritte im wesentlichen horizontal verlaufende Seite (36) aufweisen, die die unteren Kanten der ersten und zweiten Seite (28, 32) miteinander verbinden und den Bereich zwischen der ersten und zweiten Seite (28, 32) bodenwärts abschließen.

2. Mäher nach Anspruch 1, dadurch gekennzeichnet, daß in den Auswurfschacht Rampen (42) einsetzbar bzw. vorgesehen sind, die eine vierte im wesentlichen vertikal verlaufende Seite (46) aufweisen, die sich an die erste Seite (28) eines jeden Leitteils (26) anschließt, der Umlaufrichtung der zugehörigen Schneideinrichtung angepaßt ist und sich in unmittelbarer Nähe deren Rotationkreises befindet.

3. Mäher nach Anspruch 1, wobei jeder Schneideinheit ein eigener Förderkanal (34) zugeordnet ist, dadurch gekennzeichnet, daß mindestens ein Leitteil (26) mit je einer sich an die Endkanten der ersten Seite (28) anschließenden zweiten Seite (32) versehen ist, die von der ersten Seite (28) aus gesehen aufeinander zulaufen.

4. Mäher nach einem oder mehreren der vorherigen Ansprüche, dadurch gekennzeichnet, daß die Leitteile (26) einer Leiteinrichtung (24) miteinander und mit dem Mähwerksgehäuse (10) verbunden sind.

5. Mäher nach Anspruch 4, dadurch gekennzeichnet, daß die Leiteinrichtung (24) einstückig und aus einem Kunststoff hergestellt ist.

6. Mäher nach einem oder mehreren der vorherigen Ansprüche, dadurch gekennzeichnet, daß die zweiten Seiten (32) benachbarter Leitteile (26) zwischen sich oder die zweite Seite (32) mit einer Gehäusewand (14) des Mähwerksgehäuses (10) die Förderkanäle (34) begrenzen, die von den Schneideinheiten und von oben aus gesehen schräg nach innen zur Längsmittelachse des Mähers verlaufen.

7. Mäher nach einem oder mehreren der vorherigen Ansprüche, dadurch gekennzeichnet, daß die erste Seite (28) der Leitteile (26) eine größere Höhe als die vierte Seite (46) der Rampen (42) aufweist, wobei sich die erste und die vierte Seite (28, 46) von der Oberseite (12) des Mähwerksgehäuses (10) nach unten erstrecken.

8. Mäher nach Anspruch 7, dadurch gekennzeichnet, daß sich von der Unterkante der vierten Seite (46) aus eine fünfte, die Förderkanäle (34) nach oben begrenzende und nach rückwärts auf den Auswurf (22) gerichtete Seite (48) der Rampen (42) erstreckt.

9. Mäher nach Anspruch 8, dadurch gekennzeichnet, daß die fünften Seiten (48) einer jeden Rampe (42) im Bereich des Auswurfes (22) in unterschiedlichen vertikalen Lagen angeordnet sind.

10. Mäher nach Anspruch 7, dadurch gekennzeichnet, daß jede Rampe (42) mit einer Lasche (44) versehen ist, die mit der dritten Seite (36) der Leitteile (26) verbindbar ist.

11. Mäher nach einem oder mehreren der vorherigen Ansprüche, dadurch gekennzeichnet, daß jedem Leitteil (26) ein sich oberhalb der Schneideinheiten befindliches kreisbogenförmiges Ablenkblech (62) zugeordnet ist.

12. Mäher nach Anspruch 11, dadurch gekennzeichnet, daß jedes Ablenkblech (62) einen ersten, zweiten und dritten Abschnitt (66, 68, 70) aufweist, wobei sich der erste Abschnitt (66) von der Oberseite (12) des Mähwerksgehäuses (10) nach unten erstreckt und in den zweiten Abschnitt (68) übergeht, der dicht über der umlaufenden Schneideinheit liegt und in den dritten Abschnitt (70) übergeht, der sich von dem zweiten Abschnitt (68) aus zur Oberseite (12) des Mähwerksgehäuses (10) erstreckt.

13. Mäher nach Anspruch 11 oder 12, dadurch gekennzeichnet, daß jedes Ablenkblech (62) mit der Oberseite (12) des Mähwerksgehäuses (10) verstellbar verbunden ist, entsprechend dem Rotationskreis der zugehörigen Schneideinheit gebogen ist und als Ausschnitt aus einem Kreisring ausgebildet ist, dessen Zentriwinkel 180° beträgt, wobei der Zentriwinkel mindestens eines Abschnittes 60° beträgt.

## Claims

1. Mower with a mower housing (10) open towards the ground and comprising a housing wall (14) extending essentially vertically in which at least two cutting units spaced laterally to one another and rotating about vertical axes (16) are arranged and that comprises a rearward discharge well with a discharge opening (22) provided in the housing wall (14) wherein a directing device (24) is provided in the discharge well dividing it into conveying channels (34), characterised in that the directing device (24) is provided with directing parts (26) associated with each cutting device and located between each cutting device and the discharge opening (22) which comprise in each case a first vertically extending side (28) which is adapted to the direction of rotation of the associated cutting device and is located in the immediate vicinity of its rotation circle, at least one second side (32) which is connected to an end edge of the first side (28) and, viewed from the latter, extends towards the rear in the direction of the discharge opening (22), and a third side (36) extending essentially horizontally, which connect the lower edges of the first and second side (28, 32) to one another and close off the region between the first and second side (28, 32) towards the ground.

2. Mower according to claim 1, characterised in that in the discharge well ramps (42) can be inserted or are provided which comprise a fourth essentially vertically extending side (46) which joins the first side (28) of each directing part (26), is adapted to the direction of rotation of the associated cutting device and is located in the immediate vicinity of the rotation circle of the latter.

3. Mower according to claim 1, wherein an independent conveying channel (34) is associated with each cutting unit, characterised in that at least one directing part (26) is provided with a second side (32) joining each of the end edges of the first side (28), which, viewed from the first side (28), converge towards one another.

4. Mower according to one or several of the preceding claims, characterised in that the directing parts (26) of a directing device (24) are connected to one another and to the mower housing (10).

5. Mower according to claim 4, characterised in that the directing device (24) is manufactured in one piece and from a plastic.

6. Mower according to one or several of the preceding claims, characterised in that the second sides (32) of neighbouring directing parts (26) between themselves, or the second side (32) with a housing wall (14) of the mower housing (10), bound the conveying channels (34), which extend from the cutting units and, viewed from above, in a sloping manner inwardly to the longitudinal central axis of the mower.

7. Mower according to one or several of the preceding claims, characterised in that the first side (28) of the directing parts (26) has a greater height than the fourth side (46) of the ramps (42), wherein the first and the fourth side (28, 46) extend downwards from the upper side (12) of the mower housing (10).

8. Mower according to claim 7, characterised in that from the lower edge of the fourth side (46), a fifth side (48) of the ramps (42) extends bounding the conveying channels (34) upwardly and oriented rearwardly towards the discharge opening (22).

9. Mower according to claim 8, characterised in that the fifth sides (48) of each ramp (42) are arranged in different vertical positions in the region of the discharge opening (22).

10. Mower according to claim 7, characterised in that each ramp (42) is provided with a clip (44) which can be connected to the third side (36) of the directing parts (26).

11. Mower according to one or several of the preceding claims, characterised in that a deflector plate (62) in the form of an arc of a circle located above the cutting units is associated with each directing part (26).

12. Mower according to claim 11, characterised in that each deflector plate (62) comprises a first, second and third section (66, 68, 70) wherein the first section (66) extends downwards from the upper side (12) of the mower housing (10) and passes over into the second section (68) which lies closely over the rotating cutting unit and passes over into the third section (70) which extends from the second section (68) to the upper side (12) of the mower housing (10).

13. Mower according to claim 11 or 12, characterised in that each deflector plate (62) is adjustably connected to the upper side (12) of the mower housing (10), is curved according to the rotation circle of the associated cutting unit and is constructed as a segment of a circular ring whose angle at the centre amounts to 180°, while the angle at the centre of at least one section amounts to 60°.

## Revendications

1. Tondeuse comprenant un carter (10) pour un mécanisme de coupe, possédant un élément de paroi essentiellement vertical (14) et dans lequel sont disposées au moins deux unités de coupe, qui sont situées à une distance latérale réciproque et tournent autour d'axes verticaux (16), et qui comporte un tunnel arrière d'éjection comportant une ouverture d'éjection (22) prévue dans la paroi (14) du carter, un dispositif de guidage (24) divisant le tunnel d'éjection en des canaux d'entraînement (34) étant prévu dans ce tunnel d'éjection, caractérisée en ce que le dispositif de guidage (24) est équipé d'éléments de guidage (26), qui sont associés à chaque dispositif de coupe et sont situés entre chaque dispositif de coupe et l'ouverture d'éjection (22) et qui comportent respectivement un premier côté vertical (28), qui est adapté à la direction circonférentielle du dispositif de coupe associé et est situé à proximité directe de son cercle de rotation, au moins un second côté (32), qui est relié à un bord d'extrémité du premier côté (28) et s'étend vers l'arrière en direction de l'ouverture d'éjection (22), à partir de ce bord d'extrémité, et un troisième côté essentiellement horizontal (36), qui relie entre eux les bords inférieurs des premier et second côtés (28,32) et ferme, du côté du sol, la zone située entre les premier et second cotés (28,32).

2. Tondeuse selon la revendication 1, caractérisée en ce que dans le tunnel d'éjection peuvent être insérées ou sont prévues des rampes (42), qui possèdent un quatrième côté essentiellement vertical (46), qui se raccorde au premier côté (28) de chaque partie de guidage (26), est adapté à la direction circonférentielle du dispositif de coupe associé et est situé à proximité direct de son cercle de rotation.

3. Tondeuse selon la revendication 1, dans laquelle un canal particulier d'entraînement (34) est associé à chaque unité de coupe, caractérisé en ce qu'au moins une partie de guidage (26) est équipée de seconds côtés respectifs (32), qui se raccordent aux bords d'extrémité du premier côté (28) et convergent lorsqu'on regarde à partir du premier côté (28).

4. Tondeuse selon une ou plusieurs des revendications précédentes, caractérisée en ce que les parties de guidage (26) d'un dispositif de guidage (24) sont reliées entre elles et au carter (10) du mécanisme de coupe.

5. Tondeuse selon la revendication 4, caractérisée en ce que le dispositif de guidage (24) est réalisé d'un seul tenant, en une matière plastique.

6. Tondeuse selon une ou plusieurs des revendications précédentes, caractérisée en ce que les seconds côtés (32) d'éléments de parties de guidage voisines (26) limitent entre eux ou bien le second côté (32) limite, avec un élément (14) du carter (10) du mécanisme de coupe, les canaux d'entraînement (34), qui s'étendent à partir des unités de coupe, et ce lorsqu'on regarde à partir du haut, obliquement vers l'intérieur en direction de l'axe médian longitudinal de la tondeuse.

7. Tondeuse selon une ou plusieurs des revendications précédentes, caractérisée en ce que le premier côté (28) des parties de guidage (26) possède une hauteur supérieure à celle du quatrième côté (46) des rampes (42), les premier et quatrième côtés (28,46) s'étendant vers le bas à partir de la face supérieure (12) du carter (10) du mécanisme de coupe.

8. Tondeuse selon la revendication 7, caractérisée en ce qu'un cinquième côté (48) des rampes (42), qui limite vers le haut les canaux d'entraînement (34) et est dirigé vers l'arrière en direction de l'ouverture d'éjection (22), s'étend à partir du bord inférieur du quatrième côté (46).

9. Tondeuse selon la revendication 8, caractérisée en ce que les cinquièmes côtés (48) de chaque rampe (42) sont disposés au voisinage de l'ouverture d'éjection (22) dans des positions verticales différentes.

10. Tondeuse selon la revendication 7, caractérisée en ce que chaque rampe (42) est équipée d'une patte (44), qui peut être reliée au troisième côté (36) des parties de guidage (26).

11. Tondeuse selon une ou plusieurs des revendications précédentes, caractérisée en ce qu'une tôle de déviation (62) en forme d'arc de cercle, qui est située au-dessus des unités de coupe, est associée à chaque partie de guidage (26).

12. Tondeuse selon la revendication 11, caractérisée en ce que chaque tôle de déviation (62) possède des première, seconde et troisième sections (66,68, 70), la première section (66) s'étendant vers le bas à partir de la face supérieure (12) du carter (10) du mécanisme de coupe et se prolongeant par la seconde section (68), qui est située directement au-dessus de l'unité de coupe circonférentielle et se prolonge par la troisième section (70) qui s'étend à partir de la seconde section (68) en direction du côté supérieur (12) du carter (10) du mécanisme de coupe.

13. Tondeuse selon la revendication 11 ou 12, caractérisée en ce que chaque tôle de déviation (62) est reliée, de manière à être déplaçable, au côté supérieur (12) du carter (10) du mécanisme de coupe, est cintrée conformément au cercle de rotation de l'unité de coupe associée et est agencée sous la forme d'une partie d'un anneau circulaire, dont l'angle au centre est égal à 120°, l'angle au centre d'au moins une section étant égal à 60°.
